# EUROPEAN PATENT APPLICATION

(11) **EP 4 621 534 A1**
(43) Date of publication of application: **24.09.2025**
(21) Application number: 22969345.2
(22) Date of filing: 27.12.2022
(51) Int. Cl.: G06F 3/0354, H04W 4/80, G06F 21/32

(54) **MOUSE-TYPE INPUT DEVICE IN FORM OF BALLPOINT PEN**

(30) Priority: 22.12.2022 KR 20220181530
(71) Applicant: Lee, Sang Yun, Seoul 06377 (KR)
(72) Inventor: Lee, Sang Yun, Seoul 06377 (KR)
(74) Representative: ABG Intellectual Property Law, S.L.
(86) International application number: PCT/KR2022/021359
(87) International publication number: WO 2024/135911

(57) **Abstract**

A mouse-type input device in the form of a ballpoint pen, according to the present invention, may comprise: a housing; a ball formed to have a spherical shape and rotatably installed at the lower end of the housing; a ball rotation measuring unit that measures rotation of the ball and generates ball rotation data; a processor that generates, on the basis of the ball rotation data, coordinate value data representing coordinate values of a cursor displayed by a display device; and a communication unit that transmits the coordinate value data to the display device.

## Description

### [TECHNICAL FIELD]

The present disclosure relates to a mouse-type input device in the form of a ballpoint pen, and more specifically, to a mouse-type input device in the form of a ballpoint pen that allows only pre-registered users to use it by using fingerprint data, can determine whether it is in a gripped or non-gripped state on the basis of housing inclination data of a housing, and can receive various user inputs such as a drag input, a left-click input, and a right-click input.

### [BACKGROUND ART]

A mouse is one of the peripheral devices of a computer and is a device that enables various functions to be performed more easily and quickly together with a keyboard.

Such mice are broadly classified into ball mice and optical mice, and recently, the use of optical mice has been gradually increasing.

Such ball mice and optical mice commonly require the entire mouse to be actually moved in the same direction in order to move the cursor on the screen. Further, in the case of ball mice and optical mice of the related art, left-click and right-click buttons are provided as separate buttons, so users can input operation signals by selectively clicking the left-click and right-click buttons so that various functions provided at the cursor position can be executed.

Such mice of the related art are essential for using a computer, and users of application programs such as CAD or Photoshop use them very frequently.

Users who use a mouse for long periods are likely to develop wrist disorders such as carpal tunnel syndrome.

### [DETAILED DESCRIPTION OF INVENTION]

### [TECHNICAL PROBLEMS]

An objective of the present disclosure is to provide a mouse-type input device in the form of a ballpoint pen, which allows a user to provide user input like a mouse device by gripping the ballpoint pen, by generating coordinate value data of a cursor displayed by a display device on the basis of ball rotation data generated by measuring the rotation of a ball.

The objectives of the present disclosure are not limited to those described above and other objectives and advantages not stated herein may be understood through the following description and may be clear by embodiments of the present disclosure. Further, it would be easily known that the objectives and advantages of the present disclosure may be achieved by the configurations described in claims and combinations thereof.

### [TECHNICAL SOLUTION]

A mouse-type input device in the form of a ballpoint pen according to the present disclosure may include: a housing; a ball formed in a spherical shape and rotatably mounted at a lower end of the housing; a ball rotation measurement unit configured to measure rotation of the ball and generate ball rotation data; a processor configured to coordinate value data representing coordinate values of a cursor displayed by a display device on the basis of the ball rotation data; and a communication unit configured to transmit the coordinate value data to the display device.

The mouse-type input device in the form of a ballpoint pen according to the present disclosure may further include a fingerprint recognition unit configured to recognize a fingerprint of a user and generate fingerprint data,

wherein the processor may determine whether the fingerprint data is identical to pre-registered user fingerprint data, and may determine whether to perform each of measurement of the ball rotation data, generation of the coordinate value data, and transmission of the coordinate value data on the basis of the result of the determination of whether the fingerprint data is identical to the pre-registered user fingerprint data.

The processor may determine that each of a measurement function in which the ball rotation measurement unit measures the ball rotation data, a generation function in which the processor generates the coordinate value data, and a transmission function in which the communication unit transmits the coordinate value data is to be performed, when it is determined that the fingerprint data is identical to the pre-registered user fingerprint data; and may determine that each of the measurement function in which the ball rotation measurement unit measures the ball rotation data, the generation function in which the processor generates the coordinate value data, and the transmission function in which the communication unit transmits the coordinate value data is not to be performed, when it is determined that the fingerprint data is not identical to the pre-registered user fingerprint data.

The mouse-type input device in the form of a ballpoint pen according to the present disclosure may further include an inclination measurement unit configured to measure an inclination of the housing and generate housing inclination data, wherein the processor may determine which state the housing is in between a gripped state in which the housing is gripped by a user and a non-gripped state in which the housing is not gripped by a user, on the basis of the housing inclination data.

The processor may calculate a non-gripping time during which the non-gripped state is maintained, and may determine that each of a measurement function in which the ball rotation measurement unit measures the ball rotation data, a generation function in which the processor generates the coordinate value data, and a transmission function in which the communication unit transmits the coordinate value data is not to be performed, when it is determined that the non-gripping time exceeds a reference time.

The processor may calculate inclination change data representing a change in inclination of the housing on the basis of the housing inclination data, and may determine that the housing is in the non-gripped state in which the housing is not gripped by a user when an inclination change represented by the inclination change data is less than a reference inclination change.

The processor may determine whether the inclination of the housing falls within a preset non-gripping range on the basis of the housing inclination data, and may determine that the housing is in the non-gripped state in which the housing is not gripped by a user when the inclination of the housing falls within the preset non-gripping range.

The processor may determine whether the inclination of the housing falls within a preset drag range on the basis of the housing inclination data, and when the inclination of the housing falls within the preset drag range, the processor may determine that a drag input has been input from a user and control the communication unit to transmit a drag input signal corresponding to the drag input to the display device.

The mouse-type input device in the form of a ballpoint pen according to the present disclosure may further include: an inclination measurement unit configured to measure an inclination of the housing and generate housing inclination data; and a pressure measurement unit configured to measure a pen pressure, which is a pressure applied by the ball to the ground by force applied by a user gripping the housing, and generate pen pressure data.

The processor may detect user input on the basis of one or more of the pen pressure data and the housing inclination data, and the user input may be any one of a left-click input, a right-click input, and a double-click input.

The processor may detect a scroll input on the basis of a change in coordinate values indicated by the coordinate value data while a grip pressure indicated by the grip pressure data exceeds a reference grip pressure.

The processor may generate cursor linearity ratio data using a linearity ratio, which is the degree of linearity of movement of the cursor, on the basis of the coordinate value data, and determine whether a linearity ratio represented by the cursor linearity ratio data is less than a reference linearity ratio; and when linearity represented by the cursor linearity ratio data is less than the reference linearity ratio, the processor may transmit a handwriting mode request signal, which requests the display device to operate in a handwriting mode in which the display device receives one or more of characters, numbers, and symbols written by a user using the mouse-type input device in the form of a ballpoint pen, to the display device.

### [EFFECT OF INVENTION]

According to the present disclosure, by generating coordinate value data of a cursor displayed by a display device on the basis of ball rotation data generated by measuring the rotation of a ball, a user can input user input like a mouse device in a manner of gripping a ballpoint pen, thereby being able to control the cursor delicately and precisely.

### [BRIEF DESCRIPTION OF THE DRAWING]

FIG. 1 is a diagram illustrating a mouse-type input device in the form of a ballpoint pen according to an embodiment of the present disclosure.
FIG. 2 is a block diagram of the configuration of a mouse-type input device in the form of a ballpoint pen according to an embodiment of the present disclosure.
FIG. 3 is a diagram illustrating a process in which a mouse-type input device in the form of a ballpoint pen according to an embodiment of the present disclosure recognizes a fingerprint.
FIG. 4 is a diagram illustrating a process in which a mouse-type input device in the form of a ballpoint pen according to an embodiment of the present disclosure generates coordinate value data of a cursor.
FIG. 5 is a diagram illustrating a process in which a mouse-type input device in the form of a ballpoint pen according to an embodiment of the present disclosure generates housing inclination data.
FIG. 6 is a diagram illustrating a process in which a mouse-type input device in the form of a ballpoint pen according to an embodiment of the present disclosure receives a pressure input from a user.
FIG. 7 is a diagram for describing a writing mode of a mouse-type input device in the form of a ballpoint pen according to an embodiment of the present disclosure.

### [BEST MODE FOR CARRYING OUT THE INVENTION]

Hereafter, various embodiments of the present disclosure are described with reference to the accompanying drawings. However, this is not intended to limit the present disclosure to specific embodiments and should be construed as including various modifications, equivalents, and/or alternatives of the embodiments of the present disclosure. In the description of drawings, similar components may be given similar reference numerals.

In the specification, expressions such as "have", "may have", "include", or "may include" indicate the existence of corresponding characteristics (e.g., a number, a function, an operation, or a component such as a part) without excluding the existence of additional characteristics.

In the specification, the terms "A or B", "at least one of A and/or B", or "one or more of A, B and/or C" may include all possible combinations of items to be enumerated. For example, "A or B", "at least one of A and B", or "at least one of A or B" may indicate all of a case (1) including at least one A, a case (2) including at least one B, or a case (3) including both of at least one A and at least one B.

The terms such as "first" and "second" used in various embodiments may modify various components regardless of the order and/or priority and are used only to discriminate one component from another component without limiting the components. For example, a first user device and a second user device may refer to different user devices regardless of the sequence or priority. As another example, the first component may be named the second component, and vice versa, without departing from the scope of the present disclosure.

When a component (e.g., a first component) is "operatively or communicatively coupled with/to or connected to" another component (e.g., a second component), it should be understood that the component may be connected to another component directly or through another component (e.g., a third component). However, when a component (e.g., a first component) is "directly coupled to" or "directly connected to" another component (e.g., a second component), it may be understood that another component (e.g., a third component) does not exist between the component (e.g., a first component) and the other component (e.g., a second component).

The terms used herein "configured to" may be replaced, for example, with "suitable for", "having the capacity to", "designed to", "adapted to", "made to", or "capable of", depending on circumstances. The term "configured to" may not refer only to "specifically designed to" in terms of hardware. Instead, in some circumstances, the term "device configured to" may refer to a device that "is capable of performing" functions with other devices or parts. For example, a "controller configured to perform expressions A, B, and C" may refer to an exclusive processor (e.g., an embedded processor) for performing the corresponding operations or a generic-purpose processor (e.g., a CPU or an application processor) capable of performing the corresponding operations by executing one or more software programs stored in a memory.

In particular, in this specification, a "~ device" may include one or more of a Central Processing Unit (CPU), an Application Processor (AP), and a Communication Processor (CP).

In this specification, a "~ device" means all kinds of hardware device including at least one processor, and depending on embodiments, may be understood as a meaning including even a software configuration that is operated in a corresponding hardware device. For example, a "~ device" may be understood as a meaning that includes all of a smartphone, a tablet PC, a desktop, a laptop, a robot, and user clients and applications that are driven in each device, but is not limited thereto.

Terminologies used herein may be used only to describe specific embodiments without intention of limiting the range of other embodiments. Singular forms are intended to include plural forms unless the context clearly indicates otherwise. All terminologies used herein including technological or scientific terminologies may have the same meanings that are generally understood by those skilled in the art. Terminologies defined in general dictionaries of the terminologies used herein may be understood as having meanings the same as or similar to the meanings in the contexts and should not be construed as abnormally or exclusively formally meanings unless specifically defined herein. Depending on cases, even if terminologies are defined herein, they should not be construed as excluding the embodiments of the present disclosure.

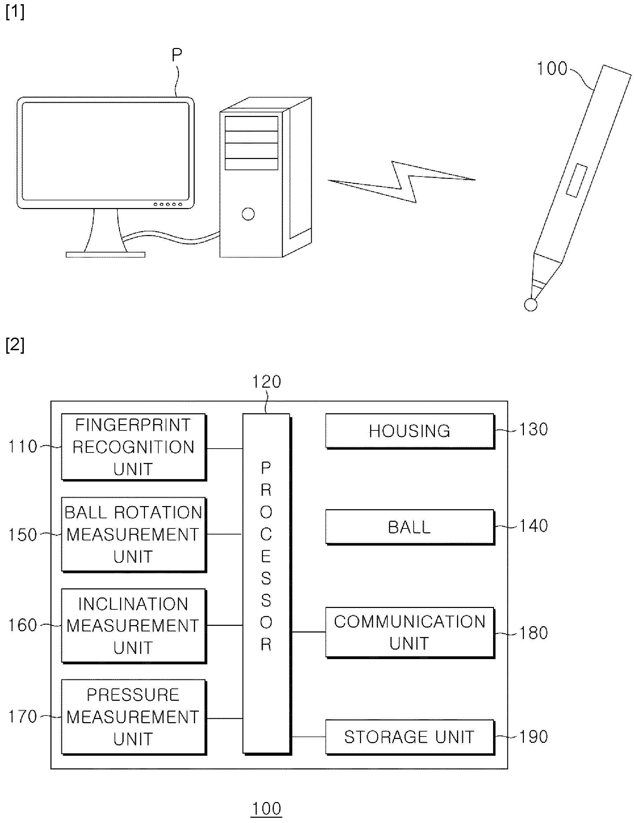

FIG. 1 is a diagram illustrating a mouse-type input device in the form of a ballpoint pen according to an embodiment of the present disclosure, and FIG. 2 is a block diagram of the configuration of a mouse-type input device in the form of a ballpoint pen according to an embodiment of the present disclosure.

Referring to FIGS. 1 and 2, a mouse-type input device 100 in the form of a ballpoint pen according to an embodiment of the present disclosure can be gripped by a user and moved on a flat surface.

In this case, the mouse-type input device 100 in the form of a ballpoint pen according to an embodiment of the present disclosure generates data indicating the distance and direction of movement by a user and transmits the data to a display device P, and the display device P can move a cursor and display it on the basis of the received data.

That is, movement of the mouse-type input device 100 in the form of a ballpoint pen according to an embodiment of the present disclosure by a user can be converted into movement of a cursor displayed on the display device P.

To this end, the mouse-type input device 100 in the form of a ballpoint pen according to an embodiment of the present disclosure may include a fingerprint recognition unit 110, a processor 120, a housing 130, a ball 140, a ball rotation measurement unit 150, an inclination measurement unit 160, a pressure measurement unit 170, a communication unit 180, and a storage unit 190.

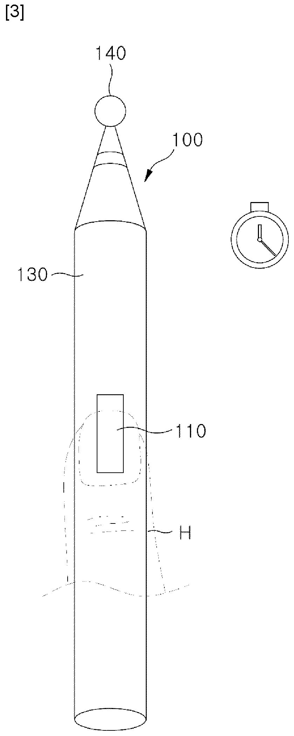

FIG. 3 is a diagram illustrating a process in which a mouse-type input device in the form of a ballpoint pen according to an embodiment of the present disclosure recognizes a fingerprint.

Referring further to FIG. 3, the fingerprint recognition unit 110 is formed on one side of the housing 130 and exposed to the outside, so it can recognize a user's fingerprint.

In this configuration, the fingerprint recognition unit 110 is covered at the top by the finger H of a user, and the fingerprint can be brought into close contact with the top.

Thereafter, the fingerprint recognition unit 110 can recognize the user's fingerprint and generate fingerprint data.

To this end, the fingerprint recognition unit 110 operates in a fingerprint registration mode before recognizing a fingerprint of a user, whereby it can recognize the fingerprint of a registered user, and generate and register the recognized fingerprint as user fingerprint data.

In the specification, a registered user may refer to a user who is authorized to use the mouse-type input device 100 in the form of a ballpoint pen.

In this configuration, the fingerprint recognition unit 110 can recognize a fingerprint of a registered user in a divided manner, combine a plurality of fingerprint data generated through the segmented recognition into a single piece of user fingerprint data, and register the combined single piece of user fingerprint data in a database.

Specifically, the fingerprint recognition unit 110 is formed in the pen-shaped housing and is configured such that the area of a fingerprint that can be recognized at one time is smaller than the total area of the fingerprint, whereby it can recognize a fingerprint in a plurality of segments and combine the segmented fingerprint data into a single piece of user fingerprint data.

In this configuration, whenever only a part of an entire fingerprint is recognized and fingerprint data is generated, the fingerprint recognition unit 110 can additionally combine the newly generated fingerprint data into the previously combined user fingerprint data, detect closed curves from the user fingerprint data, check the number of the closed curves, and continue recognizing partial fingerprints until the number of the closed curves exceeds a reference number.

Meanwhile, the user fingerprint data and fingerprint data described above may be image data obtained by capturing a fingerprint.

Meanwhile, combination of fingerprint data may refer to arranging the fingerprint images represented by the fingerprint data such that the captured fingerprint portions are connected in the fingerprint image.

The fingerprint recognition unit 110 may include a fingerprint recognition module for fingerprint recognition.

When a fingerprint is recognized and fingerprint data is generated by the fingerprint recognition unit 110 operating in an authentication mode for authenticating a user, the processor 120 can determine whether the fingerprint data is identical to the pre-registered user fingerprint data.

Subsequently, the processor 120 can determine whether to perform each of measurement of ball rotation data, generation of coordinate value data, and transmission of the coordinate value data on the basis of the result of the determination of whether the fingerprint data is identical to the pre-registered user fingerprint data.

Specifically, when it is determined that fingerprint data is identical to pre-registered user fingerprint data, the processor 120 can determine that each of a measurement function in which the ball rotation measurement unit 150 to be described below measures ball rotation data, a generation function in which the processor 120 generates coordinate value data, and a transmission function in which the communication unit 180 to be described below transmits the coordinate value data is to be performed .

Accordingly, the processor 120 can control the operation of the ball rotation measurement unit 150 such that the ball rotation measurement unit 150 measures ball rotation data, perform the generation function described above, and control the operation of the communication unit 180 such that the communication unit 180 transmits coordinate value data.

That is, the processor 120 can control the operations of components included in the mouse-type input device 100 in the form of a ballpoint pen such that the mouse-type input device 100 in the form of a ballpoint pen operates only when a user is a registered user.

On the contrary, when it is determined that fingerprint data is not identical to pre-registered user fingerprint data, the processor 120 can determine that each of the measurement function in which the ball rotation measurement unit 150 to be described below measures ball rotation data, the generation function in which the processor 120 generates coordinate value data, and the transmission function in which the communication unit 180 to be described below transmits the coordinate value data is not to be performed .

Accordingly, the processor 120 can control the operation of the ball rotation measurement unit 150 such that the ball rotation measurement unit 150 does not measure ball rotation data, does not perform the generation function described above, and can control the operation of the communication unit 180 such that the communication unit 180 does not transmit coordinate value data.

That is, the processor 120 can control the operations of components included in the mouse-type input device 100 in the form of a ballpoint pen such that the mouse-type input device 100 in the form of a ballpoint pen does not operate when a user is not a registered user.

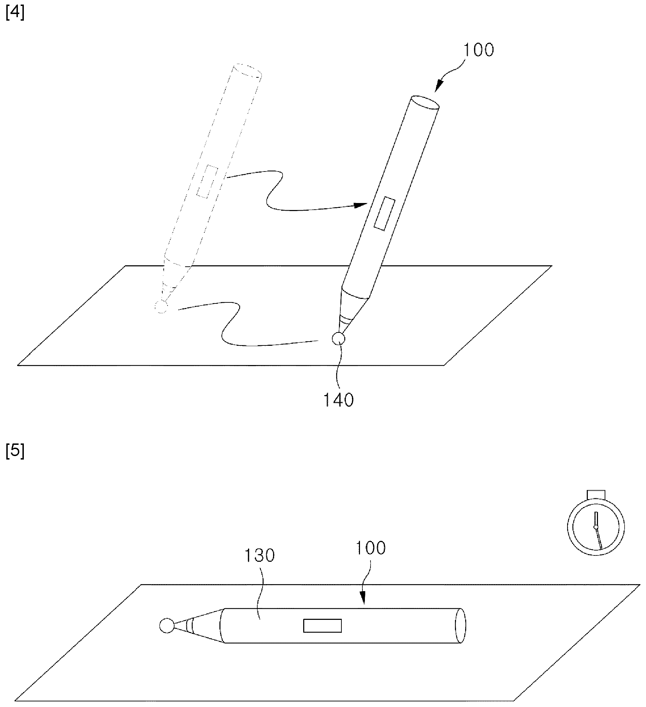

FIG. 4 is a diagram illustrating a process in which a mouse-type input device in the form of a ballpoint pen according to an embodiment of the present disclosure generates coordinate value data of a cursor.

Referring further to FIG. 4, the housing 130 is formed in the shape of a ballpoint pen and can accommodate components of the mouse-type input device 100 in the form of a ballpoint pen therein.

In this configuration, a ball 140 may be rotatably mounted at an end of the housing 130. The ball 140 may be mounted at the end of the housing 130, that is, may be mounted at the end of the housing 130 such that a portion thereof is exposed to the outside and the remaining portion is accommodated inside the end of the housing 130.

The ball 140 may be formed in a spherical shape and may be mounted at the end of the housing 130 such that the center of the sphere is not displaced.

That is, when a user grips the mouse-type input device 100 in the form of a ballpoint pen and moves the housing 130 with the ball 140 in contact with a surface, the ball 140 can rotate while maintaining the center of the sphere, following the movement of the housing 130.

The ball rotation measurement unit 150 can measure the rotation of the ball 140 and generate ball rotation data.

To this end, the ball rotation measurement unit 150 may include a first roller disposed in contact with the ball 140 and rotating together in accordance with a first rotation, which is a rotation in a first direction among rotations of the ball 140, a first slit connected to the first roller and rotating in accordance with the rotation of the first roller, a first light source emitting first light to the first slit, a first light receiving module receiving the first light blocked or unblocked by the first slit and generating first ball rotation data corresponding to the first rotation, a second roller disposed in contact with the ball 140 and rotating together in accordance with a second rotation, which is a rotation in a second direction among the rotations of the ball 140, a second slit connected to the second roller and rotating in accordance with the rotation of the second roller, a second light source emitting second light to the second slit, and a second light receiving module receiving the second light blocked or unblocked by the second slit and generating second ball rotation data corresponding to the second rotation.

Meanwhile, the ball rotation measurement unit 150 can generate the ball rotation data described above by including the first ball rotation data and the second ball rotation data.

Here, the first ball rotation data is rotation data obtained by measuring a first rotation in the first direction, which is the X-axis direction, and the second ball rotation data is rotation data obtained by measuring a second rotation in the second direction, which is the Y-axis direction, and each of the first ball rotation data and the second ball rotation data may include at least one of the number of rotations and the rotational speed.

The processor 120 can generate coordinate value data indicating the coordinate values of a cursor displayed by the display device P on the basis of ball rotation data.

Specifically, the processor 120 can generate coordinate value data including X-axis coordinate value data and Y-axis coordinate value data, that is, can generate X-axis coordinate value data on the basis of the first ball rotation data and generate Y-axis coordinate value data on the basis of the second ball rotation data.

In this configuration, the processor 120 can generate coordinate value data such that the greater the number of rotations of the ball 140 indicated by ball rotation data, the greater the change in coordinate values.

In this configuration, the processor 120 can generate coordinate value data such that the higher the rotational speed of the ball 140 indicated by ball rotation data, the greater the change in coordinate values.

Subsequently, the communication unit 180 can transmit the generated coordinate value data to the display device P.

Accordingly, the display device P can set the position of the cursor on the basis of the received coordinate value data and display it on the screen.

Meanwhile, the principle by which the mouse-type input device 100 in the form of a ballpoint pen transmits coordinate value data in response to rotation of the ball 140 may be the same as the principle by which the ball mouse devices of the related art transmit coordinate value data in response to rotation of a ball provided therein.

FIG. 5 is a diagram illustrating a process in which a mouse-type input device in the form of a ballpoint pen according to an embodiment of the present disclosure generates housing inclination data.

Referring to FIG. 5, the inclination measurement unit 160 can generate housing inclination data by measuring the inclination of the housing 130.

To this end, the inclination measurement unit 160 may have a gyro sensor.

The processor 120 can determine, on the basis of housing inclination data, whether the housing is in a gripped state in which it is gripped by a user or a non-gripped state in which it is not gripped by a user.

Specifically, the processor 120 can calculate inclination change data indicating a change in inclination of the housing 130 on the basis of housing inclination data, and when the inclination change indicated by the inclination change data is less than a reference inclination change, the processor 120 can determine that the housing 130 is in a non-gripped state in which it is not gripped by a user.

On the other hand, the processor 120 can calculate inclination change data indicating a change in inclination of the housing 130 on the basis of housing inclination data, and when the inclination change indicated by the inclination change data exceeds the reference inclination change, the processor 120 can determine that the housing 130 is in a gripped state in which it is gripped by a user.

That is, the processor 120 can determine whether it is a gripped state or a non-gripped state on the basis of the assumption that when the housing 130 is the gripped state in which it is gripped by a user, the housing inclination data changes by exceeding the reference change.

Thereafter, when the processor 120 determines that it is the non-gripped state, the processor 120 can calculate the non-gripping time during which the non-gripped state is maintained, and when the non-gripping time exceeds a reference time, the processor 120 can determine that the measurement function in which the ball rotation measurement unit 150 measures ball rotation data, the generation function in which the processor 120 generates coordinate value data, and the transmission function in which the communication unit 180 transmits the coordinate value data are not to be performed.

The processor 120 can control the operation of the ball rotation measurement unit 150 such that the ball rotation measurement unit 150 does not measure ball rotation data, does not perform the generation function described above, and can control the operation of the communication unit 180 such that the communication unit 180 does not transmit coordinate value data.

That is, when the non-gripped state is maintained for longer than the reference time, the processor 120 can block the measurement function of the ball rotation measurement unit 150 and the transmission function of the communication unit 180, thereby being able to prevent battery consumption.

Meanwhile, the processor 120 can determine whether the inclination of the housing 130 is included in a preset non-gripping range on the basis of the housing inclination data, and can determine that the housing 130 is in the non-gripped state in which it is not gripped by a user, even when the inclination of the housing 130 falls within the preset non-gripping range.

On the other hand, when the inclination of the housing 130 is not included in the preset non-gripping range, the processor 120 can determine that the housing 130 is in the gripped state in which it is gripped by a user.

In this case, the preset non-gripping range may be a range in which the inclination of the housing 130, which is the angle formed between the housing 130 and the ground, is from 0 degrees to 15 degrees.

In this case, in determining whether the housing 130 is in the gripped state or the non-gripped state, the processor 120 can use either the condition that the inclination of the housing 130 falls within the preset non-gripping range or the condition that the inclination change indicated by inclination change data exceeds a reference inclination change.

To this end, when a first setting change input is input from a user, the mouse-type input device 100 in the form of a ballpoint pen can determine whether the housing 130 is in the gripped state or the non-gripped state based solely on whether the inclination of the housing 130 falls within the preset non-gripping range.

Further, when a second setting change input is input from a user, the mouse-type input device 100 in the form of a ballpoint pen can determine whether the housing 130 is in the gripped state or the non-gripped state based solely on whether the inclination change indicated by inclination data exceeds a reference inclination change.

The processor 120 according to another embodiment, in determining whether the housing 130 is in the gripped state or the non-gripped state, can use both of the condition that the inclination of the housing 130 falls within the preset non-gripping range and the condition that the inclination change indicated by inclination change data exceeds a reference inclination change.

For example, the processor 120 can prioritize whether the inclination change indicated by inclination change data exceeds the reference inclination change over whether the inclination of the housing 130 falls within the preset non-gripping range, in determining whether the housing 130 is in the gripped state or the non-gripped state.

As a specific example, even if the inclination of the housing 130 falls within the preset non-gripping range, the processor 130 can determine that the housing 130 is in the gripped state if the inclination change indicated by inclination change data exceeds the reference inclination change.

Further, even if the inclination of the housing 130 is not included in the preset non-gripping range, the processor 120 can determine that the housing 130 is in the non-gripped state if the inclination change indicated by inclination change data does not exceed the reference inclination change.

That is, the processor 120 according to another embodiment can determine that the housing 130 is in the non-gripped state when the inclination of the housing 130 falls within a preset non-gripping range and the inclination change indicated by inclination change data does not exceed the reference inclination change.

Meanwhile, the processor 120 according to another example can determine whether the housing 130 is in the gripped state on the basis of pen pressure data.

Specifically, the processor 120 according to another example can determine that the housing 130 is in the gripped state when the pen pressure indicated by pen pressure data exceeds a grip-state pen pressure.

On the other hand, the processor 120 according to another example can determine that the housing 130 is in the non-gripped state when the pen pressure indicated by pen pressure data does not exceed the grip-state pen pressure.

In this case, the pen pressure data is data measured by the pressure measurement unit 170 to be described below, and the grip-state pen pressure may be a pressure lower than a reference pen pressure to be described below. Specifically, the grip-state pen pressure may be set as a minimum pressure that is applied to the ball 140 when the ball 140 of the mouse-type input device 100 in the form of a ballpoint pen touches the ground.

Meanwhile, the processor 120 can determine whether the inclination of the housing 130 falls within a preset drag range on the basis of the housing inclination data, and can determine that a drag input has been input from a user when the inclination of the housing falls within the preset drag range.

Subsequently, the processor 120 can control the communication unit 180 to transmit a drag input signal corresponding to the drag input to the display device P.

Here, the preset drag range may be a range in which the inclination of the housing 130, which is the angle formed between the housing 130 and the ground, is from 85 degrees to 90 degrees.

That is, the processor 120 can control the communication unit 180 to transmit a drag input signal to the display device P when the inclination of the housing 130 falls within a range of 85 degrees to 90 degrees, can determine that the housing 130 is in the non-gripped state when the inclination of the housing 130 falls within a range of 0 degrees to 15 degrees, and can control the communication unit 180 to generate coordinate value data and transmit it to the display device P when the inclination of the housing 130 falls within a range of more than 15 degrees and less than 85 degrees.

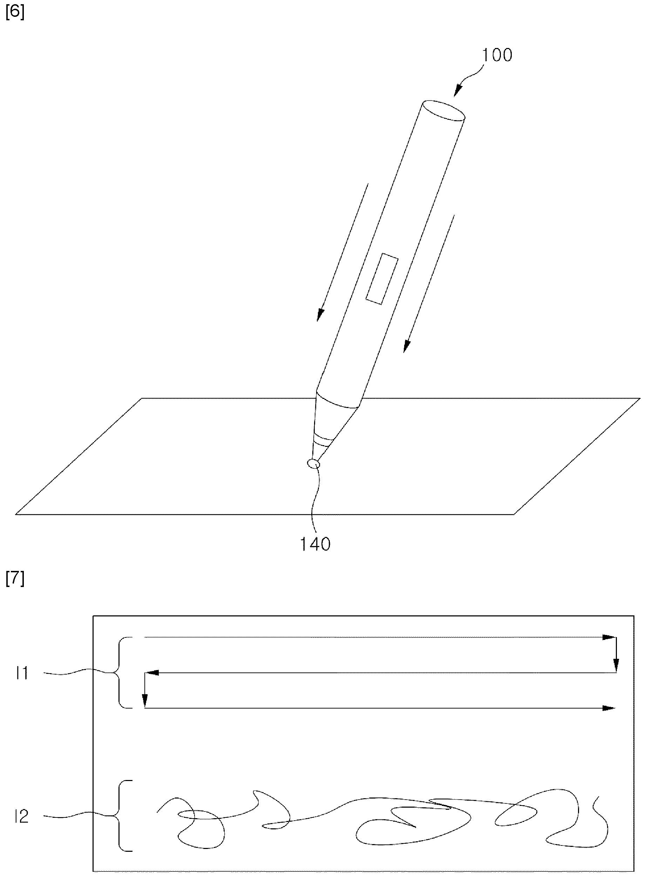

FIG. 6 is a diagram illustrating a process in which a mouse-type input device in the form of a ballpoint pen according to an embodiment of the present disclosure receives a pressure input from a user.

Referring further to FIG. 6, the pressure measurement unit 170 can measure a pen pressure, which is a pressure applied to the ground by the user gripping the mouse-type input device 100 in the form of a ballpoint pen, and generate pen pressure data.

Further, the pressure measurement unit 170 can measure a grip pressure, which is the pressure applied to the housing 130 from the user's hand (finger) gripping the housing 130 of the mouse-type input device 100 in the form of a ballpoint pen, and generate grip pressure data.

To this end, the pressure measurement unit 170 may have a pressure sensor for measuring a pen pressure and a grip pressure.

The processor 120 can detect user input on the basis of one or more of the pen pressure data and the housing inclination data, and, when user input is detected, can transmit an input signal corresponding to the detected user input to the display device P.

Specifically, when the pen pressure indicated by pen pressure data exceeds a reference pen pressure and the duration during which the pen pressure indicated by the pen pressure data exceeds the reference pen pressure is less than a reference input time, the processor 120 can determine that a first user input has been input from the user and can control the communication unit 180 to transmit a first input signal corresponding to the first user input to the display device P.

In this case, the first user input may be set and changed, depending on input settings, to any one of a left-click input received by a mouse device of the related art from the user, a right-click input received by a mouse device of the related art from the user, and a double-click input received by a mouse device of the related art from the user. Preferably, the first user input according to an embodiment may be a left-click input.

Meanwhile, when the pen pressure indicated by pen pressure data exceeds a reference pen pressure and the duration during which the pen pressure indicated by the pen pressure data exceeds the reference pen pressure is equal to or longer than a reference input time, the processor 120 can determine that a second user input has been input from the user and can control the communication unit 180 to transmit a second input signal corresponding to the second user input to the display device P.

In this case, the second user input may be set and changed, depending on input settings, to any one of a left-click input received by a mouse device of the related art from the user, a right-click input received by a mouse device of the related art from the user, and a double-click input received by a mouse device of the related art from the user. Preferably, the second user input according to an embodiment may be a right-click input.

Meanwhile, the processor 120 can identify a first inclination of the housing 130 indicated by housing inclination data at a first time point, identify a plurality of second inclinations of the housing 130 indicated by housing inclination data measured within a preset first lapse time from the first time point, and calculate inclination differences between the first inclination and each of the plurality of second inclinations.

Thereafter, the processor 120 can determine whether each of the calculated plurality of inclination differences exceeds a preset reference inclination difference, and when there is an inclination difference that exceeds the preset reference inclination difference among the plurality of inclination differences, the processor 120 can check a plurality of third inclinations of the housing 130 indicated by housing inclination data measured within an elapsed time point at which a preset first lapse time and a preset second lapse time have elapsed from the first time point, and can determine whether there is a third inclination the same as the first inclination exists among the plurality of third inclinations.

Finally, when there is a third inclination the same as the first inclination among the plurality of third inclinations, the processor 120 can determine that a third user input has been input from the user, and can control the communication unit 180 to transmit a third input signal corresponding to the third user input to the display device P.

In this case, the third user input may be set and changed, depending on input settings, to any one of a left-click input received by a mouse device of the related art from the user, a right-click input received by a mouse device of the related art from the user, and a double-click input received by a mouse device of the related art from the user. Preferably, the third user input according to an embodiment may be a right-click input.

That is, the processor 120 can determine that a right-click input, which is the third user input, has been input from a user when the housing 130 is rapidly rotated by the user.

Meanwhile, when the pen pressure indicated by pen pressure data exceeds a reference pen pressure and pen pressure data indicating a pen pressure exceeding the reference pen pressure is generated within a preset setting time from the time point at which the pen pressure indicated by the pen pressure data exceeded the reference pen pressure, the processor 120 can determine that a fourth user input has been input from the user and can control the communication unit 180 to transmit a fourth input signal corresponding to the fourth user input to the display device P.

In this case, the fourth user input may be set and changed, depending on input settings, to any one of a left-click input received by a mouse device of the related art from the user, a right-click input received by a mouse device of the related art from the user, and a double-click input received by a mouse device of the related art from the user. Preferably, the fourth user input according to an embodiment may be a double-click input.

Meanwhile, the processor 120 can detect a scroll input on the basis of a change in coordinate values indicated by coordinate value data when the grip pressure indicated by grip pressure data exceeds a reference grip pressure.

Specifically, when the grip pressure indicated by grip pressure data exceeds a reference grip pressure, the processor 120 can check coordinate value data generated while the grip pressure indicated by the grip pressure data exceeds the reference grip pressure.

Thereafter, the processor 120 can check whether a coordinate of the cursor indicated by the checked coordinate value data is moving downward or upward, and when the coordinate moves downward, the processor 120 can determine that a downward scroll input has been input from the user, and when the coordinate moves upward, the processor 120 can determine that upward scroll input has been input from the user.

In this case, the downward movement of a coordinate means that the Y-axis coordinate value (vertical axis on the display screen of the display device) among the coordinate values decreases, and the upward movement of a coordinate means that the Y-axis coordinate value among the coordinate values increases.

Then, the processor 120 can control the communication unit 180 to transmit scroll input signals corresponding to the downward scroll input and the upward scroll input, respectively, to the display device P. Accordingly, the mouse-type input device 100 in the form of a ballpoint pen can receive various user inputs even in the ballpoint pen form.

FIG. 7 is a diagram for describing a writing mode of a mouse-type input device in the form of a ballpoint pen according to an embodiment of the present disclosure.

Referring further to FIG. 7, the processor 120 can generate cursor linearity ratio data using a linearity ratio, which is the degree of linearity of movement of the cursor, on the basis of coordinate value data.

Specifically, the processor 120 can generate a cursor movement path based on the coordinate values of the cursor indicated by coordinate value data, classify the movement path into a linear path and a curved path, and generate the ratio of the linear path length, which is the length of the linear path to the entire path length that is the length of the movement path.

Thereafter, the processor 120 can determine whether the linearity ratio indicated by the cursor linearity ratio data is less than a reference linearity ratio, and when it is less than the reference linearity ratio, the processor 120 can transmit a handwriting mode request signal, which requests the display device P to operate in a handwriting mode in which it receives one or more of characters, numbers, and symbols written by a user on a surface using the mouse-type input device 100 in the form of a ballpoint pen, to the display device P.

In this case, the handwriting mode may be a mode in which, when the display device P receives coordinate value data, the coordinate value data is not used to move the cursor, but the shape formed by a path corresponding to the coordinate value data is input as one or more of characters, numbers, and symbols.

That is, when the mouse-type input device 100 in the form of a ballpoint pen operates in a mouse mode in which it is used as a mouse device, the processor 120 can use the increase in linearity of the path I1 of the cursor indicated by the coordinate value data, and when the linearity ratio indicated by the cursor linearity ratio data is less than a reference linearity ratio, it can transmit a handwriting mode request signal to the display device P.

That is, when the mouse-type input device 100 in the form of a ballpoint pen operates in a handwriting mode in which it is used to write characters, numbers, and symbols like a pen, the processor 120 can use the decrease in linearity of the path I2 of the cursor indicated by the coordinate value data, and when the linearity ratio indicated by the cursor linearity ratio data is less than the reference linearity ratio, it can transmit a handwriting mode request signal to the display device P.

Meanwhile, the processor 120 can control overall operation of the mouse-type input device 100 in the form of a ballpoint pen, using various programs stored in the storage unit 190. The processor 120 may include RAM, ROM, a graphics processing unit, a main CPU, first to nth interfaces, and a bus. In this case, RAM, ROM, the graphics processing unit, the main CPU, the first to nth interfaces, and the like may be connected to each other via the bus.

RAM stores an O/S and application programs. Specifically, when the mouse-type input device 100 in the form of a ballpoint pen is booted, an O/S is stored in the RAM, and various application data selected by the user can be stored in the RAM.

An instruction set and the like for system booting are stored in the ROM. When a turn-on instruction is input and power is supplied, the main CPU copies the O/S stored in the storage unit 190 to the RAM and operates the O/S in accordance with the commands stored in the ROM, thereby booting the system. When booting is finished, the main CPU copies various application programs stored in the storage unit 190 to the RAM and executes the application programs copied to the RAM, thereby performing various operations.

The main CPU accesses the storage unit 190 and performs booting using the O/S stored in the storage unit 190. Further, the main CPU performs various operations using various programs, contents, data, etc. stored in the storage unit 190.

The first to nth interfaces are connected to the various components described above. One of the first to nth interfaces may be a network interface connected to an external device through a network.

Meanwhile, the processor 120 may include one or more cores (not shown), a graphics processing unit (not shown), and/or a communication path (for example, a bus) that transmits and receives signals with other components.

Meanwhile, the processor 120 may further include a Random Access Memory (RAM) (not shown) and a Read-Only Memory (ROM) (not shown) that temporarily or permanently store signals (or data) that are processed therein. Further, the processor 120 may be implemented in a System-on-Chip (SoC) type including at least one of a graphic processor, a RAM, and a ROM.

The communication unit 180 can communicate with the display device P. In particular, the communication unit 180 may include various communication chips such as a Wi-Fi chip, a Bluetooth chip, a wireless communication chip, an NFC chip, and a low-power Bluetooth chip (BLE chip). In this case, the Wi-Fi chip, Bluetooth chip, and NFC chip perform communication respectively using LAN, Wi-Fi, Bluetooth, and NFC methods. When using the Wi-Fi chip or Bluetooth chip, various items of connection information such as an SSID and session key are first transmitted and received, and communication connection can be established by using this and then various items of information can be transmitted and received. A wireless communication chip refers to a chip that performs communication according to various communication standards such as IEEE, Zigbee, 3rd Generation (3G), 3rd Generation Partnership Project (3GPP), Long Term Evolution LTE), and 1st Generation (5G).

The memory 190 can store various programs and data for the operation of the mouse-type input device 100 in the form of a ballpoint pen. The storage unit 190 may be implemented as a non-volatile memory, volatile memory, flash memory, hard disk drive (HDD), or solid-state drive (SSD).

Programs (one or more instructions) for processing and controlling the processor 120 may be stored in the storage unit 190. The programs stored in the storage unit 190 may be separated into a plurality of modules in accordance with the functions of the stored programs.

Preferred embodiments of the present disclosure were described above. It would be understood by those skilled in the art that the present disclosure may be modified without departing from the scope of the present disclosure. Therefore, the disclosed embodiments should be considered in terms of explaining, not limiting. The scope of the present disclosure is not shown in the above description, but in the claims, and all differences within an equivalent range should be construed as being included in the present disclosure.

As described above, although the present disclosure was described with reference to limited exemplary embodiments and drawings, the present disclosure is not limited thereto and may be changed and modified in various ways within the spirit of the present disclosure and the range equivalent to claims described below by those skilled in the art.

## Claims

1. A mouse-type input device in the form of a ballpoint pen, comprising:
a housing;
a ball formed in a spherical shape and rotatably mounted at a lower end of the housing;
a ball rotation measurement unit configured to measure rotation of the ball and generate ball rotation data;
a processor configured to coordinate value data representing coordinate values of a cursor displayed by a display device on the basis of the ball rotation data; and
a communication unit configured to transmit the coordinate value data to the display device.

2. The mouse-type input device of claim 1, further comprising a fingerprint recognition unit configured to recognize a fingerprint of a user and generate fingerprint data,
wherein the processor determines whether the fingerprint data is identical to pre-registered user fingerprint data, and determines whether to perform each of measurement of the ball rotation data, generation of the coordinate value data, and transmission of the coordinate value data on the basis of the result of the determination of whether the fingerprint data is identical to the pre-registered user fingerprint data.

3. The mouse-type input device of claim 2, wherein
the processor
determines that each of a measurement function in which the ball rotation measurement unit measures the ball rotation data, a generation function in which the processor generates the coordinate value data, and a transmission function in which the communication unit transmits the coordinate value data is to be performed, when it is determined that the fingerprint data is identical to the pre-registered user fingerprint data; and
determines that each of the measurement function in which the ball rotation measurement unit measures the ball rotation data, the generation function in which the processor generates the coordinate value data, and the transmission function in which the communication unit transmits the coordinate value data is not to be performed, when it is determined that the fingerprint data is not identical to the pre-registered user fingerprint data.

4. The mouse-type input device of claim 1, further comprising an inclination measurement unit configured to measure an inclination of the housing and generate housing inclination data,
wherein the processor determines that which state the housing is in between a gripped state in which the housing is gripped by a user and a non-gripped state in which the housing is not gripped by a user, on the basis of the housing inclination data.

5. The mouse-type input device of claim 4, wherein the processor calculates a non-gripping time during which the non-gripped state ins maintained, and determines that each of a measurement function in which the ball rotation measurement unit measures the ball rotation data, a generation function in which the processor generates the coordinate value data, and a transmission function in which the communication unit transmits the coordinate value data is not to be performed, when it is determined that the non-gripping time exceeds a reference time.

6. The mouse-type input device of claim 4, wherein the processor calculates inclination change data representing a change in inclination of the housing on the basis of the housing inclination data, and determines that the housing is in the non-gripped state in which the housing is not gripped by a user when an inclination change represented by the inclination change data is less than a reference inclination change.

7. The mouse-type input device of claim 4, wherein the processor determines whether the inclination of the housing falls within a preset non-gripping range on the basis of the housing inclination data, and determines that the housing is in the non-gripped state in which the housing is not gripped by a user when the inclination of the housing falls within the preset non-gripping range.

8. The mouse-type input device of claim 1, further comprising an inclination measurement unit configured to measure an inclination of the housing and generate housing inclination data,
wherein the processor determines whether the inclination of the housing falls within a preset drag range on the basis of the housing inclination data, and when the inclination of the housing falls within the preset drag range, the processor determines that a drag input has been input from a user and controls the communication unit to transmit a drag input signal corresponding to the drag input to the display device.

9. The mouse-type input device of claim 1, further comprising:
an inclination measurement unit configured to measure an inclination of the housing and generate housing inclination data; and
a pressure measurement unit configured to measures a pen pressure, which is a pressure applied by the ball to the ground by force applied by a user gripping the housing, and generate pen pressure data,
wherein the processor detects user input on the basis of one or more of the pen pressure data and the housing inclination data, and
the user input is any one of a left-click input, a right-click input, and a double-click input.

10. The mouse-type input device of claim 1, further comprising a pressure measurement unit configured to measure a grip pressure, which is a pressure applied to the housing from a user gripping the housing, and generate grip pressure data,
wherein the processor detects a scroll input on the basis of a change in coordinate values indicated by the coordinate value data while a grip pressure indicated by the grip pressure data exceeds a reference grip pressure.

11. The mouse-type input device of claim 1, wherein the processor generates cursor linearity ratio data using a linearity ratio, which is the degree of linearity of movement of the cursor, on the basis of the coordinate value data, and determines whether a linearity ratio represented by the cursor linearity ratio data is less than a reference linearity ratio; and
when linearity represented by the cursor linearity ratio data is less than the reference linearity ratio, the processor transmits a handwriting mode request signal, which requests the display device to operate in a handwriting mode in which the display device receives one or more of characters, numbers, and symbols written by a user using the mouse-type input device in the form of a ballpoint pen, to the display device.
